# EUROPÄISCHE PATENTANMELDUNG

(11) **EP 2 871 591 A1**
(43) Veröffentlichungstag der Anmeldung: **13.05.2015**
(21) Anmeldenummer: 14191141.2
(22) Anmeldetag: 30.10.2014
(51) Int. Cl.: G06F 21/34, G06F 21/77, H04L 29/06

(54) **Vorrichtung als erweiterte Funktionalität eines Chipkartenterminals**

(30) Priorität: 05.11.2013 DE 202013104952 U
(71) Anmelder: Papagrigoriou, Paschalis, 90408 Nürnberg (DE)
(72) Erfinder: Papagrigoriou, Paschalis, 90408 Nürnberg (DE)
(74) Vertreter: 2K Patentanwälte Blasberg Kewitz & Reichel

(57) **Zusammenfassung**

Vorrichtung bestehend aus einem Chipkartenterminal umfassend eine Chipkarten-Ansteuerungsschnittstelle für das Lesen und/oder Schreiben von Chipkarten, eine Anzeige, eine Tastatur, eine Kommunikationsschnittstelle für den Aufbau einer physikalischen Verbindung an einem Netzwerk oder an einem Host-System, einen IP-Netzwerktreiber mit dem eine Internet-Verbindung aufgebaut werden kann und eine Verarbeitungseinheit, gekennzeichnet durch eine Einrichtung, die es dem Chipkartenterminal erlaubt, sich über die Kommunikationsschnittstelle mit einem Host-System oder Netzwerk zu verbinden und sich als Chipkartenterminal zu verhalten, über die Kommunikationsschnittstelle und mit dem IP-Netzwerktreiber eine Internet-Verbindung aufzubauen und mit Hilfe des Schlüsselmaterials und der Signaturinformation einer angesteuerten Chipkarte sicher mit anderen Kommunikationspartnern über das Internet zu kommunizieren.

## Beschreibung

### Gebiet der Erfindung:

Das Gebiet der Erfindung betrifft im Wesentlichen folgende Einsatzszenarien:
Einerseits ist es die Sicherheit für das sogenannte "Online-Banking" und für Bezahlvorgänge mit Geld- und Kreditkarten. Insbesondere hier
   - die komfortable und wirkungsvolle Absicherung der Auftragsdaten einer Banking-Transaktion oder eines Bezahlvorgangs durch Nutzung einer Banken-Signaturkarte, einer Debit- oder Kreditkarte beim Einzelhändler (Point of Sole = POS) oder der von einer Chipkarte erzeugten Transaktionsnummer (TAN) und die gesicherte Übertragung der Transkaktionsdaten
   - die starke Authentisierung auf der Basis einer Chipkarte für die Verifikation der Benutzer-Identität.
Anderseits ist es die Sicherheit für Internet-basierte Kommunikation vorwiegend über mobile und feste Kommunikationsnetze. Insbesondere hier
   - die Verschlüsselung der übertragenen Sprachinformationen und Datenströme oder Datenpakete und wie oben auch hier
   - die starke Authentisierung auf der Basis einer Chipkarte für die Verifikation der Benutzer-Identität.

Für alle der oben genannten Gebiete und für das Ansteuern der eingesetzten Chipkarten werden Chipkartenleser benötigt. Dabei werden nicht nur Daten gelesen, sondern auch geschrieben oder Applikationen auf der Chipkarte angesteuert; daher spricht man auch von einem Chipkartenterminal [1]. Für eine vollständige Definition des Chipkartenterminals und seiner Anwendungsbeispiele s. die Enzyklopädie Wikipedia ([1]).

### Stand der Technik:

In der Regel werden Chipkartenterminals mit einem Host-System (PC oder Laptop) über USB extern betrieben. Die Kommunikationsanschlüsse und Kommunikationsprotokolle können ebenfalls der Wikipedia [1] entnommen werden. Seltener vorkommend sind Chipkartenleser, die über Software-Lösungen in einem LAN betrieben werden. Ebenso denkbar ist ein Chipkartenleser mit LAN-Anschluss. Extern betriebene Chipkartenterminals werden nach dem Stand der Technik auch kabellos eingesetzt, also z.B. über Bluetooth mit einem Host-System verbunden. Als Host-System kommen dabei neben PC auch Mobiltelefone und Tablett-Computer zu Einsatz. Die Kommunikationsprotokolle zwischen Chipkartenterminal und Host-System sind in diesen Fällen noch proprietär.

Ein hoher Grad an Sicherheit wird heutzutage nur in Verbindung mit Verwendung einer Chipkarte erreicht oder auch zusätzlich in Kombination mit einem biometrischen Merkmal.

Die Anwendung, welche einen Sicherheitsbedarf hat und damit sensible Daten des Benutzers, die auf einer Chipkarte gespeichert sind, benötigt, also grundsätzlich eine Chipkarte braucht, läuft hauptsächlich auf dem Host-System. Meistens ist diese Anwendung ein Client, der mit einem (Remote-) Server interagiert. Eine solche Anwendung kann auch ausschließlich lokal im Host-System laufen. Die Ansteuerung der benötigten Chipkarten braucht wiederum ein Chipkartenterminal, das entweder intern im Host-System verbaut ist oder extern angebunden wird.

Dies gilt für alle im Gebiet der Erfindung aufgelisteten Anwendungsbereiche Online-Banking, Bezahlvorgänge, sichere Sprach- und Daten-Kommunikation.

Das Problem, das bei einer solche Architektur nach dem Stand der Technik entsteht ist, dass die relevanten Daten mit Hilfe von Geheimnissen aus der sicheren Umgebung einer Chipkarte signiert und / oder ver- bzw. entschlüsselt werden, gleichzeitig aber innerhalb einer nicht-vertrauenswürdigen Umgebung, nämlich der eines Mobiltelefons, eines Tablett-Computers oder eines vernetzten PC verarbeitet werden und dabei möglichen Angreifern, insbesondere auf diese Rechner aufbringbaren Schadprogrammen schutzlos ausgeliefert sind.

### Überblick über die Erfindung:

Gelöst wird die Aufgabe durch eine Erfindung mit den Merkmalen der Ansprüche, insbesondere durch eine Vorrichtung bestehend aus einem Chipkartenterminal umfassend eine Chipkarten-Ansteuerungsschnittstelle für das Lesen und/oder Schreiben von Chipkarten [10], eine Anzeige, eine Kommunikationsschnittstelle für den Aufbau einer physikalischen Verbindung an einem Netzwerk oder an einem Host-System, einen IP-Netzwerktreiber mit dem eine Internet-Verbindung aufgebaut wird und eine Verarbeitungseinheit, gekennzeichnet durch eine Einrichtung, die es dem Chipkartenterminal erlaubt, sich über die Kommunikationsschnittstelle mit einem Host-System oder Netzwerk zu verbinden und sich als Chipkartenterminal zu verhalten, und / oder sich über die Kommunikationsschnittstelle und mit dem IP-Netzwerktreiber eine Internet-Verbindung aufzubauen und mit Hilfe des Schlüsselmaterials und der Signaturinformation einer angesteuerten Chipkarte sicher mit anderen Kommunikationspartnern über das Internet zu kommunizieren.

Als erstes beinhaltet die Vorrichtung die Funktionen eines Chipkartenlesers oder Chipkartenterminals - vergleichbar einem Chipkartenterminal, wie es in verschiedenen Sicherheitsklassen wie 1, 2, 3, 4 oder Secoder nach dem Standard der Deutschen Kreditwirtschaft (DK, s. [1]) im Einsatz ist - und führt diese aus. Dafür wird ein Minimum an Komponenten und Schnittstellen benötigt, wie die Verarbeitungseinheit, die Chipkarten-Ansteuerungsschnittstelle, die Kommunikationsschnittstelle (z.B. einen GSM-Modul, ein WLAN-Modul, einen USB-Anschluss etc.). Damit das Gerät ein höheres Niveau an Sicherheit erreichen kann, werden Tastatur und Anzeige benötigt. Der Benutzer interagiert, sichtet und bestätigt in der Regel die Daten, die signiert werden sollen.

Für das Lösen der Aufgabe ist es erforderlich, die vertrauenswürdige Umgebung eines Chipkartenterminals zu erweitern. Über die Kommunikationsschnittstelle verbindet sich die Vorrichtung zuerst mit einem Netzwerk (z.B. Mobilfunknetz oder WLAN). Grundsätzlich besitzen moderne Smartphones, Tablets und auch PCs auch die Möglichkeit einen Internet-Zugang mit anderen Geräten zu teilen. Dieses Merkmal ist bekannt als persönlicher Hotspot, WLAN Access Point etc. Neben der WLAN-Technologie erfolgt die Verbindung zu einem Host-System auch über einen USB-, Bluetooth- oder eine NFC-Anschluss. Darüber können verbundene Geräte ihre eigene Internet-Verbindung aufbauen und mit Kommunikationspartnern oder Serversystemen im Internet kommunizieren. Über den IP-Netzwerktreiber der Vorrichtung kann anschließend eine IP-Verbindung mit einer Gegenstelle im Internet aufgebaut werden. Je nachdem welche Anwendungen innerhalb der Verarbeitungseinheit laufen sollen, kann das Anwendungsgebiet der Vorrichtung sehr breit gestaltet werden. Wichtig ist, die vertrauenswürdige Sicherheitsumgebung eines Chipkartenterminals zu nutzen (ansteuern einer Chipkarte, Ausführen von kryptographischen Algorithmen, vertrauenswürdiges Anzeigen etc.), um solche Funktionen in sicherheitsrelevanten Anwendungen zu integrieren und von einer sicheren Kommunikation auszugehen. Dies gilt sowohl für die Erfassung, Aufnahme, Verarbeitung, Ausgabe oder Wiedergabe von Daten bzw. mit einer geeigneten Tontechnik der Vorrichtung auch Voice-Daten, deren dauerhaften Speicherung auf geeigneten Speicherbausteinen oder deren Übertragung ins Internet über die oben beschriebene Internet-Verbindung.

In einer weiteren Ausführungsform weist das Chipkartenterminal der Vorrichtung zusätzlich einen Fingerprint-Sensor auf, damit die Authentifizierung des Benutzers auch über seine biometrischen Merkmale stattfinden kann. Dem Benutzer stehen somit für seine Authentisierung sowohl die PIN der verwendeten Chipkarte als auch als Alternative oder zusätzlich seine Fingerabdrücke, die er je nach Konfiguration oder Anwendungsrichtlinie einsetzen muss, zur Verfügung.

In einer weiteren Ausführungsform erfüllt das Chipkartenterminal der Vorrichtung die Sicherheitsklassen eines Chipkartenlesers "Klasse 3", "Klasse 4" oder auch der Klasse "Secoder", gemäß dem Standard der DK. Es gibt vier Sicherheitsklassen für Chipkartenleser, die bei der DK spezifiziert wurden. Sicherheitsklasse 1 und 2 sind für ein ernsthaftes Sicherheitsniveau uninteressant. Chipkartenleser der Sicherheitsklasse 3 besitzen ein Display und eine Tastatur sowie Zusatzfunktionen, mit denen das Bezahlen mit der Geldkarte im Internet möglich ist. Chipkartenleser der Sicherheitsklasse 4 verfügen zusätzlich zu den Merkmalen der Klasse 3 auch über eine eigene manipulationssichere Identität. Dies wird mit einer zusätzlichen Chipkarte möglich. Wird ein Chipkartenleser mit einem PC bzw. Host-System über USB oder eine serielle Schnittstelle verbunden, so wird dieser über proprietäre oder standardisierte Software-Schnittstellen erkannt und kann mit einer Anwendung kommunizieren. Als Standard für solche Schnittstellen gilt heute PC/SC [5], wofür es sowohl Windows- als auch Linux-Implementierungen gibt. Die Secoder-Spezifikation [L] geht über die Merkmale der Sicherheitsklasse 3 hinaus. Ein nach dieser Spezifikation gebauter Chipkartenleser enthält eine Firewall, welche vor möglichen Manipulationen schützt, während das Gerät mit dem Nutzer über Display und Tastatur interagiert (z.B. PIN-Eingabe) oder Daten für den Signaturvorgang mit einer Chipkarte verarbeitet.

In einer weiteren Ausführungsform arbeitet das Chipkartenterminal der Vorrichtung als ein POS (Point Of Sales Terminal) oder ein mobiles POS für kontaktbehaftete oder kontaktlose Banken- und Kredit-Chipkarten. Ein POS ist ein Online-Terminal zum bargeldlosen Bezahlen an einem Verkaufsort (Point Of Sales). Als Zahlungsmedium werden Chipkarten der Banken (z.B. Girocard [8], Girogo [9]) oder Kreditkarten (Mastercard, Visa, Amex etc.) verwendet [siehe auch [2]).

In einer weiteren Ausführungsform steuert die Vorrichtung mehrere Chipkarten [10] an, in dem dafür mehrere Chipkarten-Ansteuerungsschnittstellen enthalten sind.

In einer weiteren Ausführungsform steuert die Vorrichtung Chipkarten von unterschiedlichen Formaten an, um Flexibilität zu gewährleisten. Dem entsprechend werden auch die Chipkarten-Ansteuerungsschnittstellen ausgewählt. Nach der Norm ISO 7816 gibt es heute die Chipkarte [10] in einer Kreditkartengröße, im SIM-Formfaktor, als micro-SIM, als nano-SIM etc. Die Auswahl des Formfaktors der Chipkarte wird abhängig von den Anforderungen der jeweiligen Herausgeber-Stelle der Chipkarten oder auch der Gestaltungs- und Design-Vorgaben der Vorrichtung sein.

In einer weiteren Ausführungsform werden auch kontaktlose Chipkarten gelesen und geschrieben, was eine entsprechende Ausbildung der Chipkarten-Ansteuerungsschnittstellen voraussetzt. Die erfolgt nach dem Standards RFID und ISO 14443.

In einer weiteren Ausführungsform weist die Vorrichtung ein Chipkartenterminal mit einer oder mehreren Chipkarten on Board auf. D.h. es wird der integrierte Schaltkreis der Chipkarte (ohne Gehäuse) auf die Leiterplatte des Chipkartenterminals der Vorrichtung gelötet (embedded), so dass die Chipkarten-Ansteuerungsschnittstelle diesen Schaltkreis intern ansteuern kann (kein Einstecken erforderlich oder Austausch des Chipkarten-IC möglich).

In einer weiteren Ausführungsform wird das Chipkartenterminal der Vorrichtung mit verschiedenen Technologien zur Gestaltung der Tastatur ausgebildet. Die Tastatur kann mit Tasten, als Folientastatur oder Silikontastatur gebaut sein. Je nach Modell und Anforderung wird die Tastatur über einen berührungsempfindlichen Bildschirm ausgebildet.

In einer weiteren Ausführungsform weist die Vorrichtung Kommunikationsschnittstellen mit einen GSM-/UMTS-/LTE-Anschluss, einem USB-Anschluss, einen WLAN-Anschluss, einen NCF-Anschluss und/oder einem Bluetooth-Anschluss auf, über die eine physikalische Verbindung zum Host-System aufgebaut wird. Die Anschlüsse entsprechen den jeweiligen Standards und aus heutiger Sicht den Mobilfunk-Standards [11], mindestens dem Universal Serial Bus mit USB 2.0, USB 3.0 oder wireless USB (siehe auch [7]), sämtlichen Normen für WLAN über IEEE 802.11 (siehe auch [3]), den NFC-Normungen (siehe [4], [5]) und der Normung für Bluetooth (siehe [6]) inkl. Bluetooth 4.0 classic und Bluetooth 4.0 Low Energy.

In einer weiteren Ausführungsform umfasst die Vorrichtung zusätzlich eine Tontechnik für die Umwandlung (digital zu analog und umgekehrt), Bearbeitung, Aufzeichnung und Wiedergabe von Tönen des menschlichen Hörbereiches. Somit können Audios aufgenommen, sicher abgespeichert oder angehört werden und mit einem Kommunikationspartner im Internet eine Sprachkommunikation erfolgen. Für die Verschlüsselung und Entschlüsselung dienen das Schlüsselmaterial und der Signaturinformationen einer angesteuerten Chipkarte.

In einer weiteren Ausführungsform umfasst das Chipkartenterminal der Vorrichtung zusätzlich eine Videotechnik für die Umwandlung, Bearbeitung, Aufnahme und Wiedergabe von stehenden oder/und bewegten Bildern und kann die Bilder mit Hilfe des Schlüsselmaterials und der Signaturinformation einer angesteuerten Chipkarte verschlüsselt speichern, sicher über das Internet übertragen bzw. empfangenes Material entschlüsselt als Ausgabe anzeigen. Für die Ausgabe wird die Anzeige gemäß den jeweiligen Anforderungen mit Monochrom- oder Farbdisplay ausgestattet. Für die Aufnahme werden eine oder mehrere Kameras integriert.

In einer weiteren Ausführungsform baut die Vorrichtung eine sichere Kommunikation mit dem Internet auf, die so ausgebildet ist, dass Anwendungen auf der Verarbeitungseinheit der Vorrichtung laufen und auf die Daten des Benutzers auf einem Server zugreifen, die E-Mail- oder Chat-Nachrichten des Benutzers auf einen E-Mail- oder Chat-Server senden oder von diesem empfangen sowie dem Benutzer über einen VoIP-Server die verschlüsselte Sprachkommunikation oder einen Video-Kommunikations-Server die Video-Kommunikation mit einem anderen Kommunikationspartnern ermöglichen. Viele Anwendungen sind je nach Ausbau und Fähigkeit der Verarbeitungseinheit vorstellbar. Wichtig für die Auswahl sind Anwendungen, die eine sichere Kommunikation voraussetzen oder durch Verwendung der auf einer Chipkarte gespeicherten Schlüsselmaterials oder Signaturinformation zur einer sicheren Kommunikation beitragen.

In einer weiteren Ausführungsform baut die Vorrichtung über die Kommunikationsschnittstelle eine Verbindung zu einem Host-System auf und anschließend wird mit dem IP-Netzwerktreiber eine Internet-Verbindung über einen durch das Host-System für eine gemeinsame Nutzung bereitgestellten Internet-Zugang etabliert. Diese Möglichkeit des Aufbaus einer Internet-Verbindung wird in Anspruch genommen, wenn die Vorrichtung selbst nicht über eine Schnittstelle zu einem Mobilfunknetz (GSM/UMTS/LTE) verfügt oder aus Kostengründen, wenn diese z.B. im Rahmen eines Mobilfunkvertrages bereits über einen anderen Mobilfunkzugang abgedeckt sind.

In einer weiteren Ausführungsform umfasst das Chipkartenterminal der Vorrichtung für die Ausgaben von Tönen einen Kopfhöreranschluss oder zusätzlich einen Laufsprecher und für die Eingabe ein im Kopfhörer integriertes Mikrophon oder zusätzlich ein eingebautes Mikrophon.

In einer weiteren Ausführungsform umfasst die Vorrichtung einen Speicherbaustein für das dauerhafte Speichern von Daten. Der Speicherbaustein ist als Flash-Speicher bzw. Flash-EEPROM oder als vollwertige Flash-Speicherkarte ausgebildet. Die jeweilige Form hängt von den Kosten und/oder dem im Gerät verfügbaren Raum ab.

In einer weiteren Ausführungsform ist die Vorrichtung ausgebildet Daten aufzunehmen, wiederzugeben, diese zu verarbeiten und auf dem Speicherbaustein dauerhaft und verschlüsselt mit Hilfe des Schlüsselmaterials und der Signaturinformation einer angesteuerten Chipkarte abzulegen. Neben vertraulichen Fotos oder Audio-Texten kann es sich hier um Passwörter oder andere sensible Daten des Benutzers handeln.

In einer weiteren Ausführungsform baut die Vorrichtung über ihre Kommunikationsschnittstelle eine physikalische Verbindung zu einem Host-System auf, das ein Kassensystem oder ein PC-System, Smartphone, Tablet, Geldautomat oder Bezahlterminal ist. Der jeweilige Typ ist davon abhängig, welche Hauptfunktion die Vorrichtung im Fokus hat. So kann ein Kassensystem (auch als PC-Anwendung) mit der Vorrichtung verbunden sein, wenn z.B. ein Unternehmen an einer Verkaufsstelle seine Kunden die Vorrichtung zum Bezahlen aushändigt. Die Vorrichtung ist mit einem Smartphone oder Tablet verbunden, wenn der Benutzer den Internet-Zugang des Host-Systems (z.B. Smartphone) nutzt, um eine Internet-Verbindung aufzubauen, über die beispielsweise ein verschlüsseltes Telefonat mit einer Gegenstelle geführt wird. Das Host-System wird ein Geldautomat sein in Fällen, wo beispielsweise der Benutzer eine Chipkarte mit Geldkartenfunktion laden will.

In einer weiteren Ausführungsform umfasst die Vorrichtung für unterschiedliche Aufgaben unterschiedliche Mikro-Kontroller, die beispielsweise aus Gründen der Performance oder Lastverteilung eingebaut wurden.

In einer weiteren Ausführungsform ist die Kommunikationseinheit der Vorrichtung so ausgebildet, dass bei fehlender Funktion den Internet-Zugang des Host-Systems vollständig für eine eigene Internet-Verbindung zu nutzen, ein Gateway auf dem Host-System verwendet wird, mit dem die Vorrichtung verbunden ist. Ein derartiges Gateway ist erforderlich, wenn auf der Vorrichtung keine ausreichenden Ressourcen integriert wurden, wie z.B. kein IP-Stack oder eine Bluetooth Low Energy Verbindung zum Host-System. In diesen Fällen kann ein Gateway-Mechanismus auf dem Host-System programmiert werden, der die Internet-Verbindung zum Kommunikationspartner aufbaut und pflegt und die Daten der Vorrichtung zwischen dieser und dem Kommunikationspartner im Internet überträgt. Verständlicherweise sind solche Datenvolumina gering.

In einer weiteren Ausführungsform umfasst die Vorrichtung eine Energiequelle zur Stromversorgung, wobei diese aufladbar sein kann über ein USB Kabel und / oder über eine NFC-Induktion und / oder Solorzellen.

### Beschreibung der Figuren

Folgende Figuren zeigen beispielhafte Ausführungsformen der erfindungsgemäßen Vorrichtung.

### Figur 1.

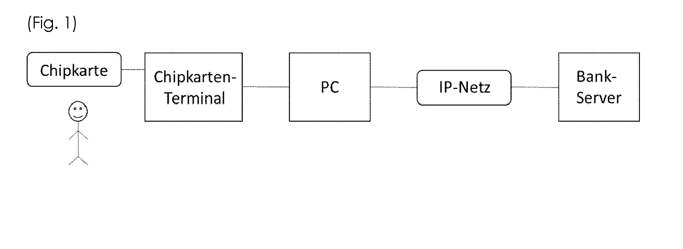

Figur 1. zeigt die erfindungsgemäße Vorrichtung mit einem Benutzer, der mit einer Chipkarte das Chipkartenterminal für die Durchführung seiner Bankgeschäfte verwendet.

### Figur 2.

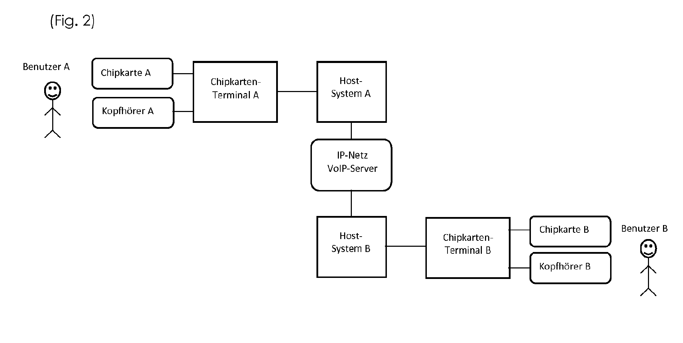

Figur 2. zeigt die erfindungsgemäße Vorrichtung, eines Benutzers A und die eines Benutzers B, die miteinander über eine IP-Verbindung und unter Verwendung ihrer Chipkarten verschlüsselt kommunizieren. Dabei wurde eine IP-Verbindung über den Internetzugang der Host-Systeme aufgebaut.

### Figur 3.

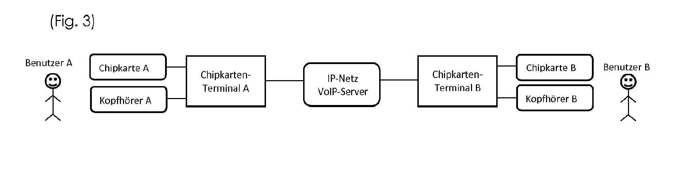

Figur 3. zeigt die erfindungsgemäße Vorrichtung eines Benutzers A und die eines Benutzers B, die miteinander über eine IP-Verbindung und unter Verwendung ihrer Chipkarten verschlüsselt kommunizieren. Dabei wurde eine IP-Verbindung direkt über ein IP-Netz aufgebaut.

### Beschreibung der Erfindung und der Ausführungsformen

Die vorliegende Erfindung betrifft eine Vorrichtung.

Die Hauptaufgabe der Vorrichtung der vorliegenden Erfindung ist es, alle sicherheitsrelevanten Aufgaben über ein Gerät zu erledigen, das als vertrauenswürdig gilt.

Ziel dieser Erfindung ist, für alle sicherheitskritischen Anwendungen eine standardgemäße vertrauenswürdige Umgebung zu verwenden, die der Benutzer multifunktional einsetzen kann.

Bei der erfindungsgemäßen Vorrichtung handelt es sich um ein Chipkartenterminal, das einerseits als solches seiner Funktion wie oben beschrieben weiterhin treu bleibt, andererseits aber so erweitert wird, dass es selbst Anwendungen auf dem Gebiet der Erfindung selbsttätig ausführt. Das bisher verbundene Wirtsystem wird für die Ausführung solcher Anwendungen nicht mehr benötigt. Die Aufgabe des Wirtsystems reduziert sich darauf, mit seinen physikalischen Kommunikationseinrichtungen wie Antenne oder Netzwerkadapter einen physikalischen Netzwerkzugang herzustellen. Die Initialisierung und Aufrechterhaltung des logischen Teils einer Internet-Kommunikation, in der Regel als IP-Kommunikation bezeichnet, übernimmt die erfindungsgemäße Vorrichtung, um einen Angriff auszuschließen. Weiter führt die erfindungsgemäße Vorrichtung die Anwendungen aus, die mit einem Server-System der Bank, eines Kreditkartenabrechnungsunternehmens, eines E-Mail-Dienstbetreibers oder dem Voice-over-IP-Server eines Sprochverschlüsselungssystems kommunizieren. Die Nichtangreifbarkeit der erfindungsgemäßen Vorrichtung ergibt sich dabei einerseits aus ihrer fehlenden direkten physikalischen Anbindung an Kommunikationsnetze, andererseits daraus, dass sie über mindestens eine eigene Recheneinheit, eine eigene Bildschirmeinheit, eine eigene Tastatur oder berührungsgesteuerte Eingabeeinheit sowie eine Audio-Ein- und Ausgabe-Schnittstelle verfügt und diese Komponenten nicht durch ein Betriebssystem gesteuert werden, das die Möglichkeit zur Ausführung von Schadprogrammen hat. Diese Gefahr besteht hauptsächlich in der Betriebsumgebung der Host-Systeme, und soll mit der erfindungsgemäße Vorrichtung abgewendet werden.

### Literaturverweise

[1] http://de.wikipedia.org/wiki/Kartenleseger%C3%A4t
[2] http://de.wikipedia.org/wiki/POS-Terminal
[3] http://de.wikipedia.org/wiki/WLAN
[4] http://de.wikipedia.org/wiki/Near Field Communication
[5] NFC ist genormt durch ISO 14443, 18092, 21481 ECMA 340, 352, 356, 362 beziehungsweise ETSI TS 102 190 genormt.
[6] http://de.wikipedia.org/wiki/Bluetooth
[7] http://de.wikipedia.org/wiki/USB
[8] http://de.wikipedia.org/wiki/Girocard
[9] http://de.wikipedia.org/wiki/Girogo
[10] http://de.wikipedia.org/wiki/Chipkarte
[11] http://de.wikipedia.org/wiki/Mobilfunknetz

## Patentansprüche

1. Vorrichtung bestehend aus einem Chipkartenterminal umfassend eine Chipkarten-Ansteuerungsschnittstelle für das Lesen und/oder Schreiben von Chipkarten, eine Anzeige, eine Tastatur, eine Kommunikationsschnittstelle für den Aufbau einer physikalischen Verbindung an einem Netzwerk oder an einem Host-System , einen IP-Netzwerktreiber mit dem eine Internet-Verbindung aufgebaut wird und eine Verarbeitungseinheit, **gekennzeichnet durch** eine Einrichtung, die es dem Chipkartenterminal erlaubt,
• sich über die Kommunikationsschnittstelle mit einem Host-System oder Netzwerk zu verbinden und sich als Chipkartenterminal zu verhalten,
• über die Kommunikationsschnittstelle und mit dem IP-Netzwerktreiber eine Internet-Verbindung aufzubauen und mit Hilfe des Schlüsselmaterials und der Signaturinformation einer angesteuerten Chipkarte sicher mit anderen Kommunikationspartnern über das Internet zu kommunizieren.

2. Die Vorrichtung nach Anspruch 1 umfasst zusätzlich einen Fingerprint-Sensor damit die Authentifizierung des Benutzers auch über seine biometrischen Merkmale stattfinden kann.

3. Die Vorrichtung nach einem oder mehreren der vorhergehenden Ansprüche, wobei das Chipkartenterminal ein Klasse 3, 4 oder ein Secoder, Standard der DK/Deutsche Kreditwirtschaft, ist, und/oder wobei das Chipkartenterminal ein POS oder ein mobiles POS für kontaktbehaftete oder kontaktlose Banken- und Kredit-Chipkarten ist, und/oder,
wobei eine oder mehrere Chipkarten-Ansteuerungsschnittstellen enthalten sind für das Lesen und/oder Schreiben von Chipkarten, insbesondere wobei die enthaltenen Chipkarten-Ansteuerungsschnittstellen für mehrere Chipkartenformate nach ISO 7816 (ID-1, ID-00, ID-000 etc.) geeignet sind.

4. Die Vorrichtung nach einem oder mehreren der vorhergehenden Ansprüche, wobei mindestens eine der enthaltenen Chipkarten-Ansteuerungsschnittstellen für das Lesen und Schreiben von kontaktlosen Chipkarten nach dem RFID oder dem ISO 14443 Standard geeignet sind.

5. Die Vorrichtung nach einem oder mehreren der vorhergehenden Ansprüche, wobei eine oder mehrere Chipkarten-Ansteuerungsschnittstellen das Lesen und/oder Schreiben von integrierten Schaltkreisen einer Chipkarte ansteuern, die als integrierte Einheit der Vorrichtung (on-board/embedded) ausgebildet ist.

6. Die Vorrichtung nach einem oder mehreren der vorhergehenden Ansprüche, wobei die Tastatur eine Tasten-, Folien-, Silikontastatur oder ein berührungsempfindlicher Bildschirm ist.

7. Die Vorrichtung nach einem oder mehreren der vorhergehenden Ansprüche, wobei die Kommunikationsschnittstelle eine GSM-/UMTS-/LTE-Schnittstelle, eine USB-Schnittstelle, WLAN-Schnittstelle, eine NFC-Schnittstelle und / oder eine Bluetooth-Schnittstelle ist.

8. Die Vorrichtung nach einem oder mehreren der vorhergehenden Ansprüche, umfasst zusätzlich eine Tontechnik für die Umwandlung (digital zu analog und umgekehrt), Bearbeitung, Aufzeichnung und Wiedergabe von Tönen des menschlichen Hörbereiches;

9. und/oder
umfasst zusätzlich eine Videotechnik für die Umwandlung, Bearbeitung, Aufnahme und Wiedergabe von stehenden oder/und bewegten Bildern, die mit Hilfe des Schlüsselmaterials und der Signaturinformation einer angesteuerten Chipkarte verschlüsselt gespeichert werden, über das Internet sicher übertragen werden oder empfangenes Material entschlüsselt auf der Anzeigeeinheit der Vorrichtung mit der jeweils benötigten Auflösung und Farbgebung angezeigt wird, und vorzugsweise mit einer oder mehreren Kameras ausgestattet ist.

10. Die Vorrichtung nach einem oder mehreren der vorhergehenden Ansprüche, **gekennzeichnet durch** eine sichere Kommunikation über eine Internet-Verbindung, wobei die Kommunikation so ausgebildet ist, dass Anwendungen auf der Verarbeitungseinheit der Vorrichtung laufen und auf die Daten des Benutzers auf einem Server zugreifen, die E-Mail- oder Chat-Nachrichten des Benutzers auf einen E-Mail-oder Chat-Server senden oder von diesem empfangen sowie dem Benutzer über einen VoIP-Server die Sprachkommunikation bzw. über ein Video-Kommunikationssystem mit einem anderen Kommunikationspartner ermöglichen.

11. Die Vorrichtung nach einem oder mehreren der vorhergehenden Ansprüche, wobei über die Kommunikationsschnittstelle eine Verbindung zu einem Host-System aufgebaut wird und anschließend mit dem IP-Netzwerktreiber eine Internet-Verbindung über einen durch das Host-System für eine gemeinsame Nutzung bereitgestellten Internet-Zugang etabliert wird.

12. Die Vorrichtung nach einem oder mehreren der vorhergehenden Ansprüche, wobei die Ausgabe im Rahmen der Tontechnik über einen Kopfhöreranschluss und / oder einen Lautsprecher und die Eingabe über einen Kopfhörer mit integriertem Mikrophon und / oder ein eingebautes Mikrophon erfolgen.

13. Die Vorrichtung nach einem oder mehreren der vorhergehenden Ansprüche umfasst zusätzlich einen Speicherbaustein für das dauerhafte Speichern von Daten, wobei der Speicherbaustein als Flash-Speicher bzw. Flash-EEPROM oder als vollwertige Flash-Speicherkarte ausgebildet ist
und/oder
**gekennzeichnet ist durch** die Funktion Daten aufzunehmen, wiederzugeben, diese zu verarbeiten und auf dem Speicherbaustein dauerhaft und verschlüsselt mit Hilfe des Schlüsselmaterials und der Signaturinformation einer angesteuerten Chipkarte abzulegen.

14. Die Vorrichtung nach einem oder mehreren der vorhergehenden Ansprüche, wobei die Kommunikationsschnittstelle eine Verbindung zu einem Host-System aufbaut, das ein Kassensystem oder ein PC-System, Smartphone, Geldautomat oder Bezahlterminal ist.

15. Die Vorrichtung nach einem oder mehreren der vorhergehenden Ansprüche, wobei die Kommunikationseinheit so ausgebildet ist, dass bei fehlender Funktion den Internet-Zugang des Host-Systems vollständig für eine eigene Internet-Verbindung zu nutzen, ein Gateway auf dem Host-System verwendet wird, mit dem die Vorrichtung verbunden ist.
